# FASCICULE DE BREVET EUROPEEN

(11) **EP 2 467 349 B1**
(45) Date de publication et mention de la délivrance du brevet: **07.08.2019**
(21) Numéro de dépôt: 10762739.0
(22) Date de dépôt: 20.08.2010
(51) Int. Cl.: C04B 28/00, C04B 14/10, C04B 103/32

(54) **CIMENT GEOPOLYMERIQUE ET SON UTILISATION**
GEOPOLYMERZEMENT UND SEINE VERWENDUNG
GEOPOLYMER CEMENT AND USE THEREOF

(30) Priorité: 21.08.2009 FR 0955740
(43) Date de publication de la demande: 27.06.2012
(73) Titulaire: Institut Francais Des Sciences Et Technologies Des Transports De L'Amenagement Et Des Reseaux (IFSTTAR), 77420 Champs Sur Marne (FR)
(72) Inventeur: HUYNH, Hieu, Thao, F-77220 Gretz Armainvilliers (FR)
(74) Mandataire: Cabinet Beau de Loménie
(86) Numéro de dépôt international: PCT/FR2010/051746
(87) Numéro de publication internationale: WO 2011/020975

(56) Documents cités:
- EP-A1- 0 612 702
- WO-A1-93/21126
- WO-A1-03/099738
- WO-A2-2008/012438
- WO-A2-2008/113609
- US-A1- 2004 255 823
- US-A1- 2008 028 994
- SINGH P S ET AL: "Geopolymer formation processes at room temperature studied by <29>Si and <27>Al MAS-NMR", MATERIALS SCIENCE AND ENGINEERING A: STRUCTURAL MATERIALS:PROPERTIES, MICROSTRUCTURE & PROCESSING, LAUSANNE, CH, vol. 396, no. 1-2, 15 avril 2005 (2005-04-15), pages 392-402, XP025303364, ISSN: 0921-5093, DOI: DOI:10.1016/J.MSEA.2005.02.002 [extrait le 2005-04-15] cité dans la demande
- PALACIOS M ET AL: "Effect of superplasticizer and shrinkage-reducing admixtures on alkali-activated slag pastes and mortars", CEMENT AND CONCRETE RESEARCH, PERGAMON PRESS, ELMSFORD, NY, US, vol. 35, no. 7, 1 juillet 2005 (2005-07-01), pages 1358-1367, XP004914248, ISSN: 0008-8846, DOI: DOI:10.1016/J.CEMCONRES.2004.10.014 cité dans la demande
- M.Collepardi, M.Valente: "Recent Developments in Superplasticizers", 8th CANMET/ACI International Conference on Superplasticizers and Other Chemical Admixtures in Concrete , 1 octobre 2006 (2006-10-01), XP002629562, Extrait de l'Internet: URL:http://www.encosrl.it/enco%20srl%20ITA /servizi/pdf/additivi/97.pdf [extrait le 2011-03-22] -& M.Collepardi, M.Valente: "Recent Developments in Superplasticizers", , 1 octobre 2006 (2006-10-01), XP002629563, Extrait de l'Internet: URL:http://www.concrete.org/PUBS/JOURNALS/ AbstractDetails.asp?SearchID=-1&publicatio n=Special+Publication&volume=239&ID=18367 [extrait le 2011-03-22]
- D.Hardjito et al.: "Factors Influencing the compressive strength of fly ash-based geopolymer concrete", Civil Engineering Dimension, vol. 6 septembre 2004 (2004-09), pages 88-93, XP002581669, ISSN: 1410-9530 Extrait de l'Internet: URL:http://puslit2.petra.ac.id/ejournal/in dex.php/civ/article/view/16116/0 [extrait le 2010-05-04]

## Description

### Etat de la technique

La présente invention concerne le domaine de la construction et du bâtiment. Plus précisément, l'invention concerne un nouveau type de ciment géopolymérique non corrosif.

Il existe deux types de ciment, les ciments dits hydrauliques tels que les ciments Portland, et les ciments dits géopolymériques. Ces derniers sont appelés ciments géopolymériques car ils sont à base de géopolymère minéral formé par la polymérisation d'oxydes d'aluminosilicate en présence d'un activateur alcalin, tel qu'un polysilicate alcalin. Le géopolymère ainsi obtenu a une structure tridimensionnelle contenant la liaison Si-O-AI.

La production de ciment géopolymérique est significativement plus écologique que la production de ciment hydraulique étant donné que la formation d'une tonne de ciment hydraulique génère environ 1 tonne de CO₂ alors qu'une tonne de ciment géopolymérique génère seulement environ 0,1 tonne de CO₂. De plus, la consommation d'énergie totale impliquée dans la production de ciment géopolymérique ne représente qu'environ 1/3 de la consommation d'énergie nécessaire à la production de ciment hydraulique. En effet, la production de ciment hydraulique nécessite la cuisson de calcaire et d'argile à très haute température (de l'ordre de 1450°C) alors que les kaolins généralement utiles dans la production de ciment géopolymérique ne nécessitent une cuisson qu'à une température d'environ 750°C.

Du fait de la nécessité d'utiliser une entité alcaline pour activer la polymérisation du mélange d'aluminosilicate, les ciments géopolymériques sont en général classifiés dans la catégorie des substances « corrosives » en se référant aux directives européennes 67/548/EEC (substances dangereuses) et 91/155/EEC (préparations dangereuses) du fait que le rapport molaire de silicates alcalins M₂O:SiO₂ (M étant en général un métal alcalin tel que le sodium (M=Na) ou le potassium (M=K)) de la solution d'activateurs est supérieur à 0,625.

En revanche, les ciments hydrauliques sont en général classés dans la catégorie des substances « irritantes » en se référant aux directives européennes ci-dessus c'est-à-dire ayant un rapport molaire M₂O:SiO₂ inférieur à 0,625.

Les ciments géopolymériques de l'art antérieur sont en général activés par une solution alcaline de silicate ayant un rapport molaire M₂O:SiO₂ supérieur à la limite de 0,625 imposée par les directives européennes et sont donc considérés comme corrosifs. En tant qu'exemple on peut citer les brevets US4640715 (rapport molaire M₂O:SiO₂ égal à 3,0), US4642137 (rapport molaire M₂O:SiO₂ supérieur à 1), US5084102 (rapport molaire M₂O:SiO₂ compris entre 0,83 et 1,25), ainsi que la demande internationale WO 2005/019130 (rapport molaire M₂O:SiO₂ égal à 3,22). La demande internationale WO 03/099738 fait référence à une solution de silicate dont le rapport molaire M₂O:SiO₂ est compris entre 0,5 et 0,8 ; toutefois les exemples de cette demande mettent en oeuvre la même solution de silicate de potassium, ayant un rapport molaire K₂O:SiO₂ égal à 0,78. On peut noter également que l'article de Puyam S. Singh et al. publié dans la revue « Material Science and Engineering A », volume 396, 2005, pages 392-402 décrit la préparation de ciments géopolymériques à partir de métakaolin et de différentes solutions de silicate de sodium dont l'une (échantillon AA) a un rapport molaire Na₂O:SiO₂ égale à environ 0.57. La demande WO 93/21126 concerne un procédé de fabrication de corps moulés légers à partir notamment de bauxite calcinée, de silice amorphe et d'un métakaolin.

La demande WO2008/012438 concerne un ciment géopolymerique à grande innocuité d'emploi, comprenant une solution de silicate alcalin de rapport molaire M₂O:SiO₂ inférieur à 0.78.

Aussi, de manière à éviter tout accident par manipulation ou inhalation au moment de la préparation du ciment géopolymérique, il est préférable que l'homme du métier travaille avec des substances dites « irritantes » et non « corrosives ».

Il est également souhaitable de pouvoir disposer d'un ciment géopolymérique « non corrosif » permettant d'obtenir des bétons ou mortiers présentant des propriétés mécaniques (fluidité et ouvrabilité avant durcissement et résistance mécanique après durcissement) adaptées à leur utilisation dans la construction de bâtiments. On peut noter que la résistance en compression d'un mortier utile dans la construction de bâtiments est d'au minimum de 25 MPa.

Les solutions d'activateurs alcalines utilisées dans la production de ciment géopolymérique sont des solutions aqueuses. Par conséquent, l'addition de ces solutions contribue à l'augmentation de la quantité d'eau présente dans le ciment géopolymérique, ce qui peut entraîner une réduction de la résistance mécanique du ciment ainsi formé. Inversement, une réduction trop importante de la quantité de solution d'activateurs utilisée, et donc de la quantité d'eau contenue dans le mélange, entraîne une perte de fluidité et donc d'ouvrabilité résultant en des temps de durcissement du ciment très courts qui ne sont généralement pas compatibles avec l'utilisation souhaitée. Il est donc souhaitable de pouvoir maîtriser la quantité de solution alcaline de silicate utilisée dans un ciment géopolymérique, sans affecter les propriétés mécaniques du ciment, mortier ou béton obtenu à partir dudit ciment géopolymérique.

### Description de l'invention

L'invention a pour objet un ciment géopolymérique « non corrosif » utile pour la fabrication de ciment, mortier ou béton conservant des propriétés mécaniques appropriées au domaine de la construction et du bâtiment.

Selon un premier aspect, l'invention concerne un ciment géopolymérique comprenant
a) un mélange de métakaolin et d'un aluminosilicate non activé thermiquement, et
b) une solution alcaline de silicate ayant un rapport molaire M₂O:SiO₂ compris dans la gamme allant de 0,51 à 0,60, M représentant Na ou K,
le rapport pondéral entre le métakaolin et l'aluminosilicate non activé thermiquement étant compris dans la gamme allant d'environ 40:60 à environ 80:20, de préférence compris dans la gamme allant d'environ 50:50 à environ 80:20.

L'aluminosilicate non activé thermiquement peut être choisi parmi du kaolin, de la bentonite, des cendres volantes, du laitier de haut fourneau, ou un mélange de ces composés. De préférence, l'aluminosilicate est du kaolin ou de la bentonite.

La solution alcaline de silicate a de préférence un rapport molaire M₂O:SiO₂ compris dans la gamme allant de 0,51 à 0,57, de préférence encore dans la gamme allant de 0,53 à 0,57. Selon un mode de réalisation préféré de l'invention, on utilise une solution de silicate de sodium (M = Na).

Le ciment géopolymérique selon l'invention est obtenu par mélange des constituants a) et b) selon des techniques bien connues de l'homme du métier.

La solution alcaline de silicate selon l'invention peut être une solution commerciale pouvant être utilisée telle quelle pour autant qu'elle présente un rapport molaire M₂O:SiO₂ compris dans la gamme allant de 0,51 à 0,60.

La solution alcaline de silicate selon l'invention peut alternativement être obtenue à partir d'une solution précurseur (commerciale ou non) ayant un rapport molaire M₂O:SiO₂ initialement non-compris dans la gamme de valeurs précitée et subséquemment ajustée avec une quantité appropriée d'hydroxyde alcalin MOH (anhydre ou en solution) pour obtenir une solution alcaline de silicate ayant un rapport molaire M₂O:SiO₂ compris dans la gamme de valeurs selon l'invention.

L'ajout de l'hydroxyde alcalin peut naturellement intervenir avant ou après le mélange de la solution alcaline de silicate et du métakaolin (ou du mélange de métakaolin et d'aluminosilicate non activé thermiquement).

Dans ces conditions, la quantité molaire de M₂O utile pour calculer le rapport molaire M₂O:SiO₂ selon l'invention est la quantité provenant de la solution de silicate précurseur avant son mélange avec le métakaolin (ou le mélange de métakaolin et d'aluminosilicate non activé thermiquement), et celle provenant de l'hydroxyde alcalin MOH ajouté.

On notera donc que par « solution alcaline de silicate » on entend la solution permettant d'activer la réaction de polymérisation du mélange de métakaolin et d'un aluminosilicate non activé thermiquement, avant ou après tous éventuels ajustements du rapport molaire M₂O:SiO₂ par ajout d'un ou plusieurs réactifs tel qu'un hydroxyde alcalin MOH, que l'ajout intervienne avant ou après le mélange de la solution alcaline de silicate et du métakaolin ou d'un mélange de métakaolin et d'un aluminosilicate non activé thermiquement.

La solution alcaline de silicate a généralement une teneur pondérale en eau comprise dans la gamme allant de 55 à 63 %.

Le métakaolin (ou kaolin calciné) utilisé dans le cadre de la présente invention est un silicate d'alumine déshydroxylé de composition générale Al₂O₃,2Si₂O₂. C'est une pouzzolane artificielle à l'état amorphe dont les particules présentent une forme lamellaire. Elle est obtenue par calcination et broyage d'une argile kaolinique dans un four flash pour obtenir un produit hyper réactif de d50 compris entre 1 et 2 µm (surface spécifique BET égale à environ 19 m²/g). Les particules sont d'abord placées dans une enceinte dont la température peut atteindre 900 à 1000°C pendant un temps très bref, de sorte que les échanges thermiques amènent les particules à la température modérée de l'ordre de 750-850°C.

Le kaolin utilisé dans le cadre de la présente invention est une argile de la famille des silicates d'alumine, qui est broyée et séchée, de d50 inférieur à 1 µm. Il présente une surface spécifique BET égale à environ 22 m²/g.

La bentonite utilisée dans le cadre de la présente invention est une argile de la famille des smectites présentant une importante capacité de gonflement à l'eau. Sa surface spécifique est comprise entre environ 80 et 150 m²/g.

Le laitier de haut fourneau utilisé dans le cadre de la présente invention est un coproduit de la fabrication de la fonte, issu d'un traitement à haute température de coke et de minerai de fer agglomérés. Le laitier broyé a une surface Blaine comprise entre environ 4350 et 4380 cm²/g.

Les cendres volantes utilisées dans le cadre de la présente invention sont des cendres volantes de classe F, issues de la combustion de houille pulvérisée en centrale thermique à flamme à la température d'environ 1400°C. Les cendres volantes, ayant une finesse Blaine comprise entre environ 1900 et 2500 cm²/g, se présentent sous la forme d'une poudre grise constituée de sphères pleines ou creuses, de nature vitreuse.

Afin d'améliorer la rhéologie des mortiers et bétons préparés à l'aide du ciment géopolymérique selon l'invention, il est possible d'ajouter différents adjuvants bien connus de l'homme du métier.

A ce jour, les études réalisées sur les adjuvants de type « superplastifiant » n'ont pas permis de mettre en évidence une quelconque amélioration des propriétés mécaniques des ciments, mortiers ou bétons préparés à partir de liants géopolymériques incorporant de tels « superplastifiants » (voir notamment Puertas et al. - Advances in Cement Research, 2003, 15, No.1, January, 23-28*;* Palacios et Puertas - Cement and Concrete Research, 2005, 35, 1358-1367*;* Chindaprasirt et al. - Cement and Concrete Composites, 2007, 29, 224-229)*.*

Contre toute attente, il a été trouvé de façon tout à fait surprenante que l'utilisation d'un polymère d'acide acrylique réticulé comme superplastifiant, permet de diminuer la quantité de solution alcaline de silicate utilisée, donc de la quantité d'eau présente dans le ciment géopolymérique, tout en apportant une amélioration des résistances mécaniques des ciments, mortiers ou bétons obtenus à partir dudit ciment géopolymérique.

Ainsi, selon un autre aspect, l'invention concerne un ciment géopolymérique comprenant
a) un mélange de métakaolin et d'un aluminosilicate non activé thermiquement,
b) une solution alcaline de silicate ayant un rapport molaire M₂O:SiO₂ compris dans la gamme allant de 0,51 à 0,60, M représentant Na ou K, et
c) un superplastifiant comprenant un polymère d'acide acrylique réticulé.

Les constituants a) et b) sont tels que définis ci-dessus. Avantageusement, le superplastifiant est un homopolymère d'acide acrylique réticulé et de préférence le superplastifiant est un homopolymère d'acide acrylique réticulé avec des éthers polyalkényle ou du divinyle glycol. De tels homopolymères (également appelés carbomères), sont commercialisés par la société Lubrizol sous la dénomination CARBOPOL®. Un homopolymère particulièrement préféré est le carbomère commercialisé sous la dénomination CARBOPOL® Ultrez 10.

Avantageusement, on utilise le superplastifiant sous la forme d'une solution aqueuse obtenue de préférence par un procédé comprenant les étapes de a) dissolution du carbomère dans de l'eau distillée et b) neutralisation partielle de la solution obtenue pour l'obtention d'un gel avec une base minérale ou organique. L'extrait sec en poids de la solution aqueuse de superplastifiant est compris dans la gamme allant d'environ 0,5 % à environ 2 %.

Un des avantages associés à l'utilisation d'un polymère d'acide acrylique réticulé réside dans le fait qu'une faible quantité est nécessaire pour obtenir les propriétés susmentionnées. Ceci contribue à la réduction du coût de fabrication du ciment géopolymérique. Ainsi, la quantité de superplastifiant utilisée est avantageusement comprise dans la gamme allant d'environ 0,01 % à environ 0,04 % en poids d'extrait sec par rapport à la quantité totale de ciment géopolymérique, de préférence comprise dans la gamme allant d'environ 0,016 % à environ 0,027 %.

Le ciment géopolymérique selon l'invention possède un rapport molaire SiO₂:Al₂O₃ compris dans la gamme allant d'environ 4,0 à environ 5,2, un rapport molaire Na₂O:SiO₂ compris dans la gamme allant d'environ 0,2 à environ 0,3, un rapport molaire Na₂O:Al₂O₃ compris dans la gamme allant d'environ 0,85 à environ 1,4, et un rapport molaire H₂O:Na₂O est compris dans la gamme allant d'environ 14,5 à environ 16,5.

Le ciment géopolymérique selon l'invention peut être utilisé dans la fabrication de mortiers ou béton, dans lesquels le ciment est mélangé à des granulats, tels que du sable, de la grave ou des gravillons. Par exemple, pour la formulation des mortiers, leur composition comprend de préférence environ 10 % en poids de métakaolin, environ 10 % en poids d'aluminosilicate non activé thermiquement, au plus environ 20 % en poids de solution alcaline de silicate, environ 0,5 % en poids de superplastifiant selon l'invention, le reste étant constitué par des granulats.

Il va de soi que les mortiers et bétons réalisés à partir du ciment géopolymérique selon l'invention peuvent comprendre un ou plusieurs additifs couramment utilisés dans le domaine de l'invention, par exemple un entraîneur d'air.

A titre indicatif, les mortiers obtenus à partir du ciment géopolymérique ont une résistance à la compression à 28 jours, mesurée selon la norme NF EN 196-1, d'au moins 28 MPa, et généralement comprise entre environ 30 MPa et environ 56 MPa, de préférence entre environ 30 et environ 45 MPa.

Avantageusement, des fibres de renfort peuvent être utilisées en association avec le ciment géopolymérique selon l'invention pour la fabrication de mortiers et bétons. Ces fibres peuvent être d'origine métallique, organique (de synthèse ou naturelle (chanvre, lin ou bambou par exemple)) ou minérale et de préférence d'origine organique de synthèse.

Ainsi, le mortier ou béton comprenant le ciment géopolymérique selon l'invention peut également contenir des fibres, de préférence des fibres organiques, et de préférence encore des fibres organiques de synthèse de type polymère aramide préférentiellement choisies parmi les fibres polyacrylonitrile, les fibres d'alcool polyvinylique, les fibres polyamide, les fibres polyéthylène haute densité et les fibres polypropylène.

A titre purement indicatif, on notera que les mortiers ou bétons ainsi obtenus sont en général dénommés par l'homme du métier « mortiers fibrés » ou « bétons fibrés ».

On notera également que l'ordre d'addition des composants constituant le ciment géopolymérique selon l'invention et les bétons et mortiers préparés à partir de ce ciment, c'est-à-dire par exemple, le métakaolin ou le mélange de métakaolin et d'un aluminosilicate non activé thermiquement, la solution alcaline de silicate, le superplastifiant comprenant un polymère d'acide acrylique réticulé, les fibres organiques et tous autres additifs connus de l'homme du métier, n'est pas important mais de préférence on préparera tout d'abord le ciment géopolymérique en mélangeant le métakaolin et éventuellement l'aluminosilicate non activé thermiquement auquel/auxquels on pourra ajouter les fibres de renfort, ensuite la solution alcaline de silicate puis, subséquemment, les autres additifs tels que les granulats et finalement le superplastifiant avec ou sans entraîneur d'air.

Il va de soi que le ciment géopolymérique selon l'invention peut également être utilisé dans la fabrication des pâtes de ciment et des coulis en association avec un ou plusieurs additifs/adjuvants tels que déjà mentionnés ci-dessus.

Les pâtes de ciment sont des suspensions de ciment dans l'eau, c'est-à-dire dans le cas présent le mélange d'aluminosilicate et de solution alcaline de silicate. On notera que, en pratique, la pâte de ciment pure est généralement peu utilisée et est le plus souvent utilisée sous forme de mélanges fluides appelés « coulis » c'est-à-dire une pâte de ciment en association avec un ou plusieurs adjuvants (par exemple : fluidifiant, superplastifiant, accélérateur de prise, retardateur de prise) et éventuellement certains ajouts (par exemple : argile, cendres volantes, fillers calcaires, laitier, fumée de silice, sable très fin (0/1 mm)).

Les coulis peuvent être utilisés dans des applications diverses et variées telles que :
- le remplissage des joints et des fissures ;
- l'injection dans des gaines de précontrainte ;
- l'isolation des déchets dangereux (chimiques ou radioactifs) stockés dans des cavités creusées dans des formations salifères;
- le scellement de tirants d'ancrage ;
- la réalisation de sols semi-rigides ;
- la mise en oeuvre dans la construction des puits de pétrole.

L'invention concerne également l'utilisation d'un superplastifiant comprenant un polymère d'acide carboxylique réticulé, tel que défini ci-dessus, dans la fabrication d'un coulis.

Les avantages liés à la présente invention sont notamment les suivants :
- l'obtention d'un ciment géopolymérique classé en tant que ciment irritant et pas corrosif selon les directives européennes en vigueur ;
- une réduction du coût de production du ciment géopolymérique du fait de la quantité réduite de métakaolin utilisé ;
- une réduction du coût de production du ciment géopolymérique du fait d'une quantité réduite de solution alcaline de silicate ;
- le durcissement du ciment géopolymérique à température ambiante ;
- une réduction de l'impact néfaste sur l'environnement entre autres par la réduction de la quantité d'énergie utilisée pour produire le ciment géopolymérique ;
- de bonnes propriétés de fluidité et d'ouvrabilité du ciment géopolymérique, ainsi qu'un maintien ou une amélioration des propriétés mécaniques des mortiers ou bétons obtenus à partir dudit ciment.

L'invention sera mieux comprise à l'aide des exemples ci-après, donnés à titre purement illustratif.

Dans ces exemples, les constituants suivants sont utilisés :
- métakaolin : produit (en poudre) commercialisé sous la dénomination Argical-M 1200S par la société AGS Minéraux ;
- cendres volantes : produit (en poudre) commercialisé sous la dénomination Silicoline® par la société SURSCHISTE ;
- kaolin : produit (en poudre) commercialisé sous la dénomination Argirec B24 par la société AGS Minéraux ;
- laitier de haut fourneau : produit (en poudre) commercialisé sous la dénomination laitier concassé 0/4 par la société SLAG ;
- bentonite : produit (en poudre) commercialisé sous la dénomination Impersol par la société Française des Bentonites et Dérivés ;
- fibres d'aramide : fibres organiques de synthèse commercialisées sous la dénomination Technora® T321 par la société Teijin ;
- solutions aqueuses de silicate de sodium : les solutions suivantes sont préparées à partir du produit commercialisé sous la dénomination sodium silicate solution TECHNICAL (SiO₂:Na₂O en poids = 3,25) et sodium hydroxyde solide (97%) par la société VWR :
   ∘ solution 1 : solution de rapport molaire Na₂O:SiO₂ égal à 0,54, contenant 62,4% en poids d'eau
   ∘ solution 2 : solution de rapport molaire Na₂O:SiO₂ égal à 0,53, contenant 62,8% en poids d'eau
   ∘ solution 3 : solution de rapport molaire Na₂O:SiO₂ égal à 0,57, contenant 62,1% en poids d'eau
   ∘ solution 4 : solution de rapport molaire Na₂O:SiO₂ égal à 0,51, contenant 63% en poids d'eau
   ∘ solution 5 : solution de rapport molaire Na₂O:SiO₂ égal à 0,53, contenant 62,7% en poids d'eau
   ∘ solution 6 : solution de rapport molaire Na₂O:SiO₂ égal à 0,57, contenant 62,1 % en poids d'eau
- superplastifiant : produit commercialisé sous la dénomination CARBOPOL® Ultrez 10 par la société Lubrizol.

### Etape 1: formulation de mortiers à partir du ciment géopolymérique selon l'invention

On prépare les formulations ayant la composition indiquée dans le tableau 1 (toutes les quantités sont exprimées en g).

**Tableau 1**

| | Ex1* | Ex2 | Ex3 | Ex4 | Ex5 | Ex6 | Ex7 | Ex8 | Ex9 | Ex10 | Ex11 | Ex12 | Ex13 | Ex14 | Ex15 |
|---|---|---|---|---|---|---|---|---|---|---|---|---|---|---|---|
| métakaolin | 450 | 360 | 225 | 225 | 360 | 360 | 360 | 225 | 225 | 225 | 225 | 225 | 360 | 360 | 225 |
| cendres volantes | - | 90 | 225 | 225 | - | - | - | - | - | - | - | - | - | - | - |
| kaolin | - | - | - | - | 90 | 90 | - | - | - | - | - | - | - | - | - |
| laitier | - | - | - | - | - | - | 90 | 225 | 225 | 225 | 225 | 225 | - | - | 225 |
| bentonite | - | - | - | - | - | - | - | - | - | - | - | - | 90 | 90 | - |
| solution 1 | 821 | - | - | - | 821 | 700 | - | - | - | - | - | - | - | - | - |
| solution 2 | - | 753 | - | - | - | - | - | - | - | - | - | - | - | - | - |
| solution 3 | - | - | 560 | 420 | - | - | - | 698 | 590 | 560 | 520 | 420 | - | - | - |
| solution 4 | - | - | - | - | - | - | 765 | - | - | - | - | - | - | - | - |
| solution 5 | - | - | - | - | - | - | - | - | - | - | - | - | 900 | 780 | - |
| solution 6 | - | - | - | - | - | - | - | - | - | - | - | - | - | - | 530 |
| superplastifiant | - | - | 7 | 12 | - | 10 | - | - | 7 | 7 | 8 | 12 | - | 12 | 12 |
| fibres | - | - | - | - | - | - | - | - | - | - | - | - | - | - | 9 |

| | | | | | | | | | | | | | | | |
|---|---|---|---|---|---|---|---|---|---|---|---|---|---|---|---|
| * hors invention | | | | | | | | | | | | | | | |

### Etape 2: préparation de mortiers et détermination des résistances mécaniques

On prépare un mortier selon un procédé bien connu de l'homme du métier, à savoir : malaxer d'abord à petite vitesse les constituants en poudre des ciments géopolymériques préparés à l'étape 1 avec la solution aqueuse de silicate de sodium correspondante pendant 30 secondes, puis introduire le sable normalisé CEN (EN 196-1) pendant 30 secondes, à raison de trois parties en poids de sable par une partie en poids de métakaolin ou de mélange de métakaolin et d'aluminosilicate non activé thermiquement, passer ensuite à grande vitesse pendant 30 secondes supplémentaires et arrêter le malaxeur pendant 90 secondes. Pendant l'arrêt du malaxeur, ajouter éventuellement le superplastifiant puis racler le mélange et reprendre ensuite le malaxage à grande vitesse pendant 60 secondes.

On notera que lorsque les fibres de renfort sont utilisées, ces dernières sont préférablement mélangées avec les constituants en poudre du ciment avant ajout de la solution aqueuse de silicate de sodium correspondante.

Après malaxage, le mortier ainsi obtenu est versé dans un moule et laissé durcir à la température ambiante pour obtenir des prismes de dimensions 4x4x16 cm. Les éprouvettes sont alors démoulées après 24 heures et testées à l'essai de flexion puis à la compression simple à 7 jours et à 28 jours selon la norme NF EN 196-1.

Le tableau 2 ci-dessous résume les résultats des résistances mécaniques obtenus pour les mortiers formulés selon l'invention.

**Tableau 2**

| Résistances (MPa) | Ex1§ | Ex2 | Ex3* | Ex4* | Ex5 | Ex6* | Ex7 | Ex8 | Ex9* | Ex10* | Ex11* | Ex12* | Ex13 | Ex14* | Ex15** |
|---|---|---|---|---|---|---|---|---|---|---|---|---|---|---|---|
| Flexion à 7j | 6,46 | 6,15 | 7,67 | 9,31 | 4,96 | 5,56 | 5,54 | 4,9 | 6,86 | 7,96 | 8,38 | 9,86 | - | 4,60 | - |
| Compression à 7j | 40,64 | 39,87 | 39,97 | 56,00 | 30,30 | 34,25 | 38,16 | 34,91 | 41,45 | 43,4 | 47,3 | 55,07 | - | 31,10 | - |
| Flexion à 28j | 5,85 | 6,77 | 9,06 | 10,44 | 5,57 | 6,20 | 6,42 | 6,02 | 8,57 | 9,09 | 9,52 | - | 4,78 | 4,84 | 10,95 |
| Compression à 28j | 42,64 | 40,75 | 48,60 | 56,65 | 32,72 | 39,41 | 39,27 | 43,76 | 46,76 | 50,87 | 51,80 | - | 28,63 | 31,45 | 54,14 |

| | | | | | | | | | | | | | | | |
|---|---|---|---|---|---|---|---|---|---|---|---|---|---|---|---|
| * indique la présence d'un superplastifiant ** indique la présence d'un superplastifiant et de fibres de renfort § hors invention | | | | | | | | | | | | | | | |

Les exemples ci-dessus montrent bien que le remplacement partiel du métakaolin par un aluminosilicate non activé thermiquement, ce qui est avantageux d'un point de vue économique, n'altère pas ou très peu la résistance à la flexion et à la compression à 28 jours particulièrement en présence de superplastifiant selon l'invention.

On notera que l'homme du métier se serait attendu à ce que la diminution de la quantité de métakaolin nécessite une augmentation de la quantité de solution alcaline de silicate ou utiliser des solutions alcalines « corrosives ». Il est donc très surprenant de pouvoir obtenir des mortiers à base de ciment géopolymérique à teneur réduite en métakaolin tout en étant répertorié dans la catégorie des matériaux « irritants ».

De façon très remarquable, il est également possible de diminuer de manière significative la quantité de solution alcaline de silicate utilisée, en ajoutant un superplastifiant de type « carbomère » au ciment géopolymérique, tout en conservant ou améliorant les propriétés mécaniques des mortiers obtenus à partir dudit ciment. En effet, en comparant les résultats obtenus dans les exemples 8 à 12, on s'aperçoit qu'il est possible de diminuer la quantité de solution alcaline de silicate d'environ 40% en utilisant un homopolymère d'acide acrylique réticulé. Le coût total de la production d'un mortier et son impact sur l'environnement sont donc réduits de façon significative.

## Revendications

1. Ciment géopolymérique comprenant
un métakaolin,
un aluminosilicate non activé thermiquement, et
une solution alcaline de silicate ayant un rapport molaire M₂O:SiO₂ compris dans la gamme allant de 0,51 à 0,60, de préférence de 0,51 à 0,57, de préférence encore de 0,53 à 0,57, M représentant Na ou K ;
le rapport pondéral métakaolin:aluminosilicate étant compris dans la gamme allant de 40:60 à 80:20, de préférence compris dans la gamme allant de 50:50 à 80:20.

2. Ciment géopolymérique selon la revendication 1, dans lequel l'aluminosilicate non activé thermiquement est choisi parmi le groupe constitué d'un kaolin, d'une bentonite, de cendres volantes, d'un laitier de haut fourneau et de leurs mélanges.

3. Ciment géopolymérique selon la revendication 1 ou 2, dans lequel l'aluminosilicate non activé thermiquement est choisi parmi le kaolin et la bentonite.

4. Ciment géopolymérique selon l'une quelconque des revendications 1 à 3, qui comprend également :
un homopolymère d'acide acrylique réticulé en tant que superplastifiant.

5. Ciment géopolymérique selon la revendication 4, dans lequel l'homopolymère d'acide acrylique réticulé est un homopolymère d'acide acrylique réticulé avec des éthers polyalkényle ou du divinyle glycol.

6. Ciment géopolymérique selon la revendication 4 ou 5, dans lequel le superplastifiant se présente sous la forme d'une solution aqueuse ayant un extrait sec en poids compris dans la gamme allant d'environ 0,5 à environ 2%.

7. Ciment géopolymérique selon la revendication 6, dans lequel le superplastifiant est présent à raison d'environ 0,01% à environ 0,04% en extrait sec par rapport audit ciment.

8. Ciment géopolymérique selon l'une quelconque des revendications 1 à 7, dans lequel M est Na.

9. Ciment géopolymérique selon l'une quelconque des revendications 1 à 8, dans lequel
- le rapport molaire SiO₂:Al₂O₃ est compris dans la gamme allant d'environ 4,0 à environ 5,2 ;
- le rapport molaire Na₂O:SiO₂ est compris dans la gamme allant d'environ 0,2 à environ 0,3 ;
- le rapport molaire Na₂O:Al₂O₃ est compris dans la gamme allant d'environ 0,85 à environ 1,4 ; et
- le rapport molaire H₂O:Na₂O est compris dans la gamme allant d'environ 14,5 à environ 16,5.

10. Mortier ou béton comprenant un ciment géopolymérique selon l'une quelconque des revendications 1 à 9, et des granulats.

11. Mortier ou béton selon la revendication 10, comprenant également des fibres, de préférence des fibres organiques, et de préférence encore des fibres organiques de synthèse de type polymère aramide choisies parmi les fibres polyacrylonitrile, les fibres d'alcool polyvinylique, les fibres polyamide, les fibres polyéthylène haute densité et les fibres polypropylène.

12. Coulis ou pâte de ciment comprenant un ciment géopolymérique selon l'une quelconque des revendications 1 à 9.

## Patentansprüche

1. Geopolymerzement, umfassend:
ein Metakaolin,
ein nicht thermisch aktiviertes Aluminiumsilikat, und
eine alkalische Silikatlösung, die ein Molverhältnis von M₂O:SiO₂ aufweist, das im Bereich von 0,51 bis 0,60, vorzugsweise von 0,51 bis 0,57, noch bevorzugter von 0,53 bis 0,57, liegt, wobei M Na oder K darstellt,
wobei das Mengenverhältnis von Metakaolin:Aluminiumsilikat im Bereich von 40:60 bis 80:20 liegt, vorzugsweise im Bereich von 50:50 bis 80:20 liegt.

2. Geopolymerzement nach Anspruch 1, wobei das nicht thermisch aktivierte Aluminiumsilikat aus der Gruppe bestehend aus einem Kaolin, einem Bentonit, Flugasche, einer Hochofensachlacke und Mischungen davon ausgewählt ist.

3. Geopolymerzement nach Anspruch 1 oder 2, wobei das nicht thermisch aktivierte Aluminiumsilikat aus dem Kaolin und dem Bentonit ausgewählt ist.

4. Geopolymerzement nach einem der Ansprüche 1 bis 3, außerdem umfassend: ein vernetzte Acrylsäure-Homopolymer, das als Superweichmacher wirkt.

5. Geopolymerzement nach Anspruch 4, wobei das vernetzte Acrylsäure-Homopolymer ein Acrylsäure-Homopolymer ist, das mit Polyalkenylethern oder Divinylglykol vernetzt ist.

6. Geopolymerzement nach Anspruch 4 oder 5, wobei der Superweichmacher in Form einer wässrigen Lösung vorhanden ist, die eine Trockenmasse aufweist, die im Bereich von etwa 0,5 bis etwa 2 Gew.-% liegt.

7. Geopolymerzement nach Anspruch 6, wobei der Superweichmacher in einer Menge von etwa 0,01 % bis etwa 0,04 % Trockenmasse im Vergleich zu dem Zement vorhanden ist.

8. Geopolymerzement nach einem der Ansprüche 1 bis 7, wobei M Na ist.

9. Geopolymerzement nach einem der Ansprüche 1 bis 8, wobei
- das Molverhältnis von SiO₂:Al₂O₃ im Bereich von etwa 4,0 bis etwa 5,2 liegt,
- das Molverhältnis von Na₂O:SiO₂ im Bereich von etwa 0,2 bis etwa 0,3 liegt,
- das Molverhältnis von Na₂O:Al₂O₃ im Bereich von etwa 0,85 bis etwa 1,4 liegt, und
- das Molverhältnis von H₂O:Na₂O im Bereich von etwa 14,5 bis etwa 16,5 liegt.

10. Mörtel oder Beton, der einen Geopolymerzement nach einem der Ansprüche 1 bis 9 sowie Granulate umfasst.

11. Mörtel oder Beton nach Anspruch 10, der außerdem Fasern, vorzugsweise organische Fasern und noch bevorzugter organische Synthesefasern vom Typ Polymeraramid umfasst, die aus Polyacrylonitrilfasern, Polyvinylalkoholfasern, Polyamidfasern, Polyethylenfasern hoher Dichte und Polypropylenfasern ausgewählt sind.

12. Zementschlamm oder -paste, umfassend einen Geopolymerzement nach einem der Ansprüche 1 bis 9.

## Claims

1. A geopolymer cement comprising
a metakaolin,
a non-thermally activated aluminosilicate, and
an alkaline silicate solution having a molar ratio M₂O:SiO₂ comprised in the range from 0.51 to 0.60, preferably from 0.51 to 0.57 and more preferably from 0.53 to 0.57, M representing Na or K;
the metakaolin:aluminosilicate weight ratio being comprised in the range from 40:60 to 80:20, preferably in the range from 50:50 to 80:20.

2. The geopolymer cement according to claim 1, wherein the non-thermally activated aluminosilicate is selected from the group consisting of a kaolin, a bentonite, flyash, a blast furnace slag and mixtures thereof.

3. The geopolymer cement according to claim 1 or 2, wherein the non-thermally activated aluminosilicate is a kaolin or a bentonite.

4. The geopolymer cement according to any one of claims 1 to 3, further comprising a crosslinked acrylic acid homopolymer as superplasticizer.

5. The geopolymer cement according to claim 4, wherein the crosslinked acrylic acid homopolymer is an acrylic acid homopolymer crosslinked with polyalkenyl ethers or divinyl glycol.

6. The geopolymer cement according to claim 4 or 5, wherein the superplasticizer is present in the form of an aqueous solution having a solids content by weight comprised in the range from about 0.5 to about 2%.

7. The geopolymer according to claim 6, wherein the superplasticizer is present in an amount of from about 0.01% to about 0.04% of solids content, with respect to said cement.

8. The geopolymer cement according to any one of claims 1 to 7, in which M is Na.

9. The geopolymer cement according to any one of claims 1 to 8, in which
- the molar ratio SiO₂:Al₂O₃ is comprised in the range from about 4.0 to about 5.2;
- the molar ratio Na₂O:SiO₂ is comprised in the range from about 0.2 to about 0.3;
- the molar ratio Na₂O:Al₂O₃ is comprised in the range from about 0.85 to about 1.4; and
- the molar ratio H₂O:Na₂O is comprised in the range from about 14.5 to about 16.5.

10. A mortar or concrete comprising a geopolymer cement according to any one of claims 1 to 9, and aggregates.

11. The mortar or concrete according to claim 10, further comprising fibers, preferably organic fibers and more preferably synthetic organic fibers of aramid polymer type selected from the group consisting of polyacrylonitrile fibers, polyvinyl alcohol fibers, polyamide fibers, high density polyethylene fibers and polypropylene fibers.

12. A grout or cement paste comprising a geopolymer cement according to any one of claims 1 to 9.
